Europäisches Patentamt

European Patent Office

Office européen des brevets

(19)

(11) veröffentlichungsnummer: **0 016 243**

**A1**

(12) **EUROPÄISCHE PATENTANMELDUNG**

(21) Anmeldenummer: **79101286.7**

(22) Anmeldetag: **30.04.79**

(51) Int. Cl.³: **F 24 J 3/02**
**C 09 D 5/32**

(30) Priorität: **15.02.79 AT 1154/79**

(43) Veröffentlichungstag der Anmeldung:
**01.10.80 Patentblatt 80/20**

(84) Benannte Vertragsstaaten:
**BE DE FR GB IT NL**

(71) Anmelder: **Woodman, Trevor P., Dr.**
**Im Breiteli 16**
**CH-8117 Fällanden(CH)**

(72) Erfinder: **Woodman, Trevor P., Dr.**
**Im Breiteli 16**
**CH-8117 Fällanden(CH)**

(54) Farbe zur spektral selektiven Beschichtung von Metalloberflächen und Verwendung der Farbe.

(57) Farbe zur spektral selektiven Beschichtung von Metalloberflächen, die ein für Wärmestrahlung durchlässiges Metalloxyd-Pigment und ein aushärtbares Bindemittel enthalten, welches nach dem Aushärten das Pigment auf einer Metalloberfläche festhält und gleichfalls für Wärmestrahlung durchlässig ist, wobei die Durchlässigkeit sowohl des Pigments wie auch des ausgehärteten Bindemittels so gross ist, dass die Farbschicht, auf der Metalloberfläche aufgebracht und ausgehärtet dieser Oberfläche zumindest eine mittlere Selektivität von 2,5 verleiht.

Als Pigmente sind besonders $Cr_2O_3$, $CO_3O_4$, $Fe_3O_4$ und CuO, und als Bindemittel wird Glycerol bevorzugt. Verwendung dieser Farben zur spektral selektiven Beschichtung des Absorptionselementes eines Strahlungsenergiekollektors.

Croydon Printing Company Ltd.

- 1 -

Farbe zur spektral selektiven Beschichtung von
Metalloberflächen und Verwendung der Farbe.

Die Erfindung betrifft eine Farbe zur spektral selektiven Beschichtung von Metalloberflächen und die
Verwendung dieser Farbe.

Eine mit einer Absorptionschicht überzogene Metalloberfläche wird als spektral selektiv bezeichnet, wenn das
Absorptionsvermögen $\alpha$ der beschichteten Oberfläche für
Strahlung eines bestimmten Wellenlängenbereiches, z.S.
Sonnenstrahlung (Wellenlängen von ca. 0,3 bis ca. 2,5 $\mu$m),
grösser ist als das Emissionsvermögen $\epsilon$ derselben Oberfläche für Strahlung eines anderen Wellenlängenbereiches,
z.B. Wärmestrahlung (Wellenlängen grösser als ca. 2,5 $\mu$m
bei einer Oberflächentemperatur von rund 100°C). Die
Selektivität der beschichteten Oberfläche wird in der
Regel durch das Verhältnis $\alpha/\epsilon$ dargestellt. In dieser
Patentschrift bedeuten die Ausdrücke "mittlere Selektivität" und "mittelselektiv" Werte von $\alpha/\epsilon$ von ca. 2,5 bis
ca. 5; "hohe Selektivität" und "hochselektiv" bedeuten
Werte von $\alpha/\epsilon$ , die grösser als ca. 5 sind. Es ist
unmittelbar einleuchtend, dass derart beschichtete
Metalloberflächen mit mittlerer bis hoher Selektivität im
Bau von Strahlungsenergiekollektoren zur Wärmegewinnung,
insbesondere Sonnenenergiekollektoren, wesentlich deren
Wirkungsgrad beeinflussen.

Heute sind verschiedene Absorptionsschichten bekannt, welche geeigneten Metalloberflächen eine hohe Selektivität verleihen. Die Schichten werden auf chemischem oder elektrochemischem Weg, aber auch durch Aufdampfen oder Niederschlag aus der Gasphase auf Metalloberflächen aufgebracht. Zum Teil werden Selektivitätswerte von über 9 erreicht. Die Herstellungskosten für solche Absorptionsschichten sind aber derart hoch, dass sich ihre Verwendung, z.B. in Sonnenenergiekollektoren, nur in Sonderfällen lohnt. Die Verwendung eines herkömmlichen schwarzen Lackes mit $\alpha/\varepsilon$ ca. 1 als Absorptionsbeschichtung für z.B. Sonnenenergiekollektoren ist wohl billig, doch bleibt der Wirkungsgrad dieser Kollektoren infolge der hohen Wärmeabstrahlung von der Oberfläche des Absorptionselementes, z.B. einer lackierten, mit wasserführenden Kanälen versehenen Metallplatte, beschränkt, so dass eine wirtschaftliche Wärmegewinnung nur in seltenen Fällen erreicht wird.

Woodman (Solar Energy 19 , 1977, 263) beschreibt, dass auch Schichten mittlerer Selektivität (um ca. 3) die Leistung von Strahlungsenergiekollektoren, insbesondere Flachkollektoren, erheblich zu steigern vermögen. Um Metalloberflächen eine mittlere Selektivität zu verleihen, wäre eine Absorptionsschicht aus einer farb- oder lackähnlichen Mischung, die im wesentlichen aus pulverförmigem Pigment und Bindemittel besteht, sehr geeignet.

In der Fachliteratur sind zwar verschiedene Versuche beschrieben, Metalloberflächen mit Hilfe von Mischungen aus Pigment und Bindemittel spektral selektiv zu beschichten; einzig die von Moore et al (Sharing the Sun, Solar Technology in the Seventies, Joint Conference USISES/ Solar Energy Soc. Canada, 15.-20. August, 1976, Winnipeg, S. 187-204) beschriebenen Beschichtungen erreichen aber eine mittlere Selektivität. Das Aushärten der Schichten während 12 Stunden bei 121°C (S.189) macht diese aller-

dings für eine industrielle Fertigung ungeeignet. Hinzu kommt, dass sich das verwendete Pigment - Eisenoxydschwarz - bei Temperaturen von über ca. 300°C in ein rötliches Produkt mit einem verminderten Absorptionsvermögen umwandelt, so dass die Arbeitstemperatur solcher Schichten sicherheitshalber auf beispielsweise 200°C begrenzt werden muss. Fischer und Woodman (CH Patentschrift 606944; D Offenlegungsschrift 26 56 490) beschreiben zwar auch eine farbähnliche selektive Beschichtung mit Kupfer-, Kobalt- oder Eisenoxyd als Pigment, doch ist in diesem Fall weder die Verwendung eines aushärtbaren Bindemittels vorgesehen noch die erreichte Selektivität angegeben. Die Verwendung von Glycerol für Farben zur spektral selektiven Beschichtung von Metalloberflächen ist nirgends beschrieben.

Aufgabe der Erfindung ist es, eine Farbe bereitzustellen, die einfach und preisgünstig herzustellen, und auf Metalloberflächen aufzubringen ist, wodurch diesen Oberflächen zumindest eine mittlere Selektivität verliehen wird. Für die industrielle Verwendung der Farbschicht ist es wichtig, dass das Bindemittel kurzzeitig aushärtbar ist, eventuell bei erhöhter Temperatur, dass die Selektivität trotz Temperaturen von mindestens 200°C, hoher relativer Luftfeuchtigkeit und starker Bestrahlung jahrelang erhalten bleibt, und dass eine gute Haftung der ausgehärteten Farbschicht bei schockartiger thermischen Beanspruchung sowie beim Durchbiegen der Metallunterlage gewährleistet ist. Aus der Sicht einer vielfältigen Verwendung ist eine gute chemische und mechanische Stabilität der Farbschicht auch bei Temperaturen von über 200°C von Vorteil.

Zur Lösung dieser Aufgabe geht die Erfindung von der Erkenntnis aus, dass es pulverförmige Pigmente und Bindemittel gibt, die aufgrund ihrer besonderen Eigenschaften erlauben, eine solche Farbe herzustellen.

Die Farbe müsste die Eigenschaft haben, sich in einer möglichst gleichmässig dünnen Schicht auf Metalloberflächen aufbringen zu lässen. Das Bindemittel müsste sich nach dem Aufbringen der Farbschicht aushärten lassen, so dass es das Pigment auf der Metalloberfläche festhält und für die Wärmeabstrahlung dieser Oberfläche stark durchlässig wird. Das in der Farbschicht enthaltene Pigment müsste ebenfalls für die Wärmeabstrahlung möglichst transparent sein, gleichzeitig aber für die aufzufangende Strahlung, z.B. Sonnenstrahlung, möglichst absorbierend sein. Damit die Absorptionsschicht die erforderlichen optischen Eigenschaften aufweist, müsste zudem deren Gesamtdicke möglichst klein sein, jedenfalls kleiner als die kleinste, intensitätsmässig wichtige Wellenlänge der Abstrahlung, z.B. kleiner als ca. 3 $\mu$m bei einer Oberflächentemperatur von rund 100$^{\circ}$C. Damit würde erreicht, dass das Emissionsvermögen der beschichteten Oberfläche im wesentlichen durch die niederemittierende Metalloberfläche bestimmt würde, und dass der Beitrag der Absorptionsschicht dazu von minderer Bedeutung wäre.

Die üblichen Pigmente und Bindemittel, die in der Lack- und Farbindustrie verwendet werden, weisen diese Eigenschaften vereint durchwegs nicht auf.

Gemäss der Erfindung ist das Pigment der Farbe ein pulverförmiges, für Wärmestrahlung durchlässiges Metalloxyd, weist das Bindemittel die Eigenschaften auf, dass es nach dem Aushärten das Pigment auf Metalloberflächen festhält und für Wärmestrahlung durchlässig ist, und ist die Durchlässigkeit des Pigmentes und des ausgehärteten Bindemittels derart hoch, dass die Farbschicht, auf einer Metalloberfläche aufgebracht und ausgehärtet, dieser Oberfläche zumindest eine mittlere Selektivität verleiht.

Als pulverförmige Pigmente sind besonders Chromoxyd ($Cr_2O_3$), Eisenoxyd ($Fe_3O_4$), Kobaltoxyd ($Co_3O_4$) sowie Kupferoxyd ($CuO$) geeignet. Kupferoxyd (braun) und Chrom-

oxyd (grün) ermöglichen es zudem, eine farbige, d.h. nicht schwarze Farbschicht zu erzeugen, die gleichwohl einer Metalloberfläche spektral selektive Eigenschaften verleiht, was aus ästhetischen Gründen, z.B. bei Sonnenkollektoren an Gebäuden von Wichtigkeit sein kann. Für die Absorption von Strahlung, welche ein sonnenähnliches Spektrum aufweist empfiehlt es sich, dem farbigem Pigment etwas schwarzes Pigment ($Co_3O_4$ , $Fe_3O_4$) beizumischen, da sonst das Absorptionsvermögen der Beschichtung zu klein sein könnte.

Eine erste Gruppe von Substanzen, die bei der Ausführung dieser Erfindung als Bindemittel nützlich sind umfasst Flüssigkeiten, die eine Suspension des Pigmentes bilden und sich nach dem Aufbringen der Farbschicht verflüchtigen lassen, nötigenfalls durch Erhitzen. Beispiele dieser Gruppe sind organische Lösungsmittel wie Azeton, Xylol, Methanol, Aethanol, Isopropanol und n-Propanol, oder Mischungen von tert-Butanol mit Isopropanol oder n- Propanol. Aufgrund der bisherigen Erfahrung wird jedoch postuliert, dass sich jede Flüssigkeit verwenden lässt, welche die beschriebenen Eigenschaften aufweist. Die Haftung des Pigmentes wird in den meisten Fällen erhöht, wenn man das Substrat während des Aushärtens kurzzeitig auf mindestens $180^oC$ erhitzt.

Eine zweite Gruppe von Bindemitteln umfasst Flüssigkeiten von relativ hoher Viskosität, die zusammen mit Pigmenten eine Farbe bilden und sich nach dem Aufbringen auf eine Metalloberfläche thermisch zersetzen lassen. Nützlich in dieser Beziehung sind jene Polyalkohole, die sich bei Temperaturen von unter ca. $200^oC$ zersetzen lassen oder Lösungen davon, beispielsweise Glycerol oder eine wässrige Lösung von Sorbitol.

Als Bindemittel, das die erforderlichen Eigenschaften in Verbindung mit den oben erwähnten Metalloxyden in beson-

ders vorteilhafter Weise zeigt, wurde Glycerol ($C_3H_8O_3$) gefunden. Glycerol weist zudem eine für die Farbherstellung und -bearbeitung günstige Viskosität auf, ist nicht toxisch, lässt sich mit Wasser oder einem Alkohol verdünnen und ist von der chemischen Industrie in ausreichender Reinheit preisgünstig erhältlich. Als besonders günstig haben sich Gewichtsmischverhältnisse von Pigment zu Glycerol zwischen ca. 1 zu 2 und ca. 5 zu 1 erwiesen, wobei die Verarbeitung durch Beimischung von Isopropanol oder n-Propanol als Verdünner erleichtert wird. Die Verarbeitung der Rohmaterialien kann zweckmässigerweise in einer handelsüblichen Misch-Mahlmaschine erfolgen. Die aufgebrachte Farbschicht wird durch Erhitzen ausgehärtet; bei 130°C ist sie schon staubtrocken, die maximale Haftung wird aber erst erreicht, nachdem eine Substrattemperatur von 180° bis 200°C überschritten worden ist. Die Aushärtezeit bei 180°C beträgt weniger als eine Minute. Das Erhitzen kann beispielsweise erfolgen : in einem Ofen, in einer Gasflamme, durch Anstrahlen oder indem man ein heisses Fluidum durch Kanäle im Substrat fliessen lässt.

Das Aufbringen der erfindungsgemässen Farbe kann durch Rollen, Spritzen, Tauchen, Fluten, Pinseln, im Siebdruckverfahren oder auf irgendeine Art erfolgen, so dass eine gleichmässig dünne Farbschicht von einer Dicke von einigen µm erzielt wird.

Nach der vorliegenden Erfindung ist die Verwendung der Farbe zur spektral selektiven Beschichtung des Absorptionselementes in einem Kollektor für Strahlungsenergie von besonderem Interesse. Es kann sich dabei um einen Sonnenenergiekollektor, aber auch um einen Kollektor für irgendwelche andere Strahlungenergie handeln. Mit Vorteil verwendet man für das Absorptionselement ein Metall wie z.B. Kupfer, Aluminium oder eine Aluminiumlegierung, das sowohl ein niedriges Emissionsvermögen als auch eine gute Wärmeleitfähigkeit aufweist. Es können aber auch Unterlagen z.B. aus Messing, Stahl, verzinktem, verkupfertem, vernickeltem, verzinntem, rostfreiem oder mit Aluminium plattiertem Stahl oder eine mit einer Metallschicht überzogene, nicht metallische Unterlage, z.B. aus Kunststoff oder Glas, verwendet werden. Die Erfindung ist jedoch keineswegs auf eine Verwendung mit den genannten Metallen begrenzt. Vor dem Aufbringen der Farbe ist die Metalloberfläche von Fetten, Oxyden und anderen Verunreinigungen zu säubern, welche das Emissionsvermögen steigern würden. Eine gewisse Rauhigkeit der Oberfläche ist erwünscht, damit sie von der Farbe gut benetzt wird, doch darf die Rauhigkeit in der Regel ca. 1 bis 2 $\mu$m nicht übersteigen, da sonst das Emissionsvermögen erhöht würde. Zur Vorbereitung der Metalloberfläche kommen Verfahren wie z.B. das Scheuern mit Stahlwolle, Seife und Wasser, ein gezieltes Beizen oder das blosse Entfetten in Frage.

Derartig selektiv beschichtete Absorptionselemente eignen sich besonders gut zur Verwendung in Sonnenenergiekollektoren, insbesondere in Flachkollektoren oder Kollektoren mit schwacher bis mittlerer Konzentration der Sonnenstrahlung. Durch Herabsetzung der thermischen Verluste des Kollektors kann ein bedeutender Mehrertrag an Wärme (im Vergleich zu einem Kollektor mit einer nicht selektiven Beschichtung) bei annähernd gleichbleibender Investition erzielt werden. Dadurch wird die Wirtschaftlichkeit der Wärmegewinnung wesentlich erhöht.

Im folgenden wird die Erfindung anhand von Beispielen näher erläutert.

Beispiel 1

Es wurden 300g $Co_3O_4$ mit 300g Glycerol (98% rein) und 50g Isopropanol grob vorgemischt. Anschliessend wurde diese Mischung dreimal durch eine im Handel erhältliche Misch-Mahlmaschine zur Feinmahlung und Emulgierung durchgelassen. Es wurde die feinste Stufe der Mahlfeinheit einge- stellt.Ein ca. 30 x 30 cm grosse Platte aus kommerziell reinem Aluminium wurde mit Stahlwolle, Seife und Wasser entfettet und aufgerauht, mit Wasser gespült und mit einem Tuch getrocknet.

Die Farbmischung wurde mit soviel Isopropanol verdünnt, dass die Viskosität ca. 13 Sek. DIN betrug. Mit einer Spritzpistole wurde eine gleichmässig dünne Farbschicht auf die gereinigte Aluminiumfläche gespritzt, so dass das Nassgewicht der Schicht ca. 9g pro m2 Fläche betrug.

Die Platte wurde mit einer Gasflamme rasch aufgeheizt, während ca. 10 Sek. bei ca. 200°C ausgehärtet und anschliessend in der Luft abgekühlt. Die Beschichtung war mattschwarz in Erscheinung. Ein ca. 8 x 8 cm grosses Stück wurde herausgeschnitten und für optische Messungen verwendet.

Das Absorptionsvermögen wurde mit einem Spektrometer der Marke Zeiss M4QIII mit Remissionszusatz RA3 gemessen und für das Sonnenspektrum bei Sonnenhöhe 30° (AM2) umgerech- net. Das Emissionsvermögen wurde bei Probetemperatur 70°C mittels eines Infrarotpyranometers gemessen, mit poliertem Gold ($\epsilon$ = 3%) und schwarzer Farbe ($\epsilon$ = 98%) als Bezugs- flächen.
Messergebnis : $\alpha$ = 91% ; $\epsilon$ = 30% ; $\alpha/\epsilon$ = 3,0 .
Die Probe wurde nachträglich in der Gasflamme bis ca. 600°C geglüht: die optischen Werte wurden dadurch nicht verändert und die Abriebfestigkeit blieb erhalten.

Beispiel 2

Farbmischung : 60g $Co_3O_4$ + 180g $Cr_2O_3$ + 160g 98% Glycerol
Verarbeitung : wie im Beispiel 1, mit Zugabe von 10g Isopropanol
Substrat : Kupferblech, ca. 8 x 8 cm Reinigung     : wie im Beispiel 1
Beschichtung : mittels Gummiwalze, Nassgewicht ca. 9g/m2
Aushärten    : wie im Beispiel 1
Erscheinung  : matt-dunkelgrün
Messergebnis : $\alpha$ = 85% ; $\epsilon$ = 34% ; $\alpha/\epsilon$ = 2,5


Beispiel 3


Farbmischung : wie im Beispiel 1, verdünnt bis 13 Sek.DIN
Substrat     : rostfreier Stahl, 80 x 80 x 0,5 mm
Reinigung    : Entfetten, Aufrauhen mit Stahlwolle und
               wässriger Lösung von 10% HCl + 2% $H_3PO_4$ ,
               Spülen, Trocknen.
Beschichtung : gleichmässiges Bespritzen bis zur knappen
               Ueberdeckung der metallischen Glanz
Aushärten    : 30 Sek. bei 180$^\circ$C
Erscheinung  : mattschwarz
Messergebnis : $\alpha$ = 92% ; $\epsilon$ = 35% ; $\alpha/\epsilon$ = 2,6


Beispiel 4


Farbmischung : wie im Beispiel 1, verdünnt bis 13 Sek.DIN
Substrat     : verzinnter Stahl, 80 x 80 x 0,3 mm
Reinigung    : Entfetten in Azeton
Beschichtung und Aushärten : wie im Beispiel 3
Erscheinung  : mattschwarz
Messergebnis : $\alpha$ = 93% ; $\epsilon$ = 37% ; $\alpha/\epsilon$ = 2,5


Beispiel 5


Farbmischung : wie im Beispiel 1, verdünnt bis 13 Sek.DIN
Substrat     : verzinkter Stahl, 80 x 80 x 0,5 mm
Reinigung    : Entfetten, Aufrauhen mit Stahlwolle und
               5% HCl, Spülen, Trocknen
Beschichtung und Aushärten : wie im Beispiel 3
Erscheinung  : mattschwarz
Messergebnis : $\alpha$ = 93% ; $\epsilon$ = 36% ; $\alpha/\epsilon$ = 2,6

Beispiel 6

Farbmischung : 50g CuO, fein gepulvert + 50g 98% Glycerol
Verarbeitung : handgemischt, mit Zugabe von 5g Isopropanol
Substrat : Kupfer, 80 x 80 x 0,5 mm
Reinigung : Entfetten, Aufrauhen mit Stahlwolle und 5% HCl, Spülen, Trocknen
Beschichtung : mittels Gummiwalze
Aushärten : Aufheizen auf $180^{o}$C

Eine zweite Schicht wurde auf die erste Schicht aufgebracht und ausgehärtet.

Erscheinung : mattbraun
Messergebnis :  $\alpha$ = 92% (für sichtbares Licht)
 $\alpha$ = 78% (AM2 Spektrum)
 $\epsilon$ = 19% ;  $\alpha/\epsilon$ = 4,1

Beispiel 7

Farbmischung : wie im Beispiel 1, verdünnt bis 13 Sek.DIN
Substrat : kommerziell reines Aluminium, 100x100x0,5mm
Reinigung : Entfetten, leichtes Aufrauhen mit Stahlwolle und 5% NaOH Lösung, Spülen, Trocknen
Beschichtung und Aushärten : wie im Beispiel 3
Erscheinung : mattschwarz

Diese Probe wurde von einem unabhängigen Labor mit anderen Instrumenten ausgemessen. Hierfür wurde aus der Probe eine Scheibe von 22 mm Durchmesser herausgeschnitten und die diffuse Remission mit einem Spektrophotometer gemessen. Daraus ergab sich das solare Absorptionsvermögen. Die gleiche Scheibe wurde in einem Infrarot-Reflektometer Typ Gier Dunkle, Modell DB-100 analysiert und das Emissionsvermögen bei $50^{o}$C Probetemperatur errechnet.
Messergebnis :  $\alpha$ = 92% ;  $\epsilon$ = 29% ;  $\alpha/\epsilon$ = 3,2

Beispiel 8

Farbmischung : wie im Beispiel 1, verdünnt bis 13 Sek.DIN

Substrat      : Kupfer, 100 x 100 x 0,5 mm
Reinigung     : wie im Beispiel 6
Beschichtung und Aushärten : wie im Beispiel 3
Erscheinung   : mattschwarz
Messergebnis (nach Methode von Beispiel 7) :

$$\alpha = 93\% \; ; \; \epsilon = 25\% \; ; \; \alpha/\epsilon = 3,7$$

Beispiel 9

Eine 1,4 m2 grosse, für einen Sonnenkollektor bestimmte Roll-Bond Platine aus Aluminium wurde vorbereitet, beschichtet und die Farbschicht ausgehärtet wie im Beispiel 7. Ein entsprechender, im Handel erhältlicher Sonnenkollektor mit nicht selektiver schwarzer Beschichtung und einer Abdeckung aus zwei Glasscheiben wurde so abgeändert, dass die erfindungsgemäss beschichtete Platine anstelle der gleichgrossen Originalplatine, und eine einzige Glasscheibe anstelle der Doppelverglasung eingebaut wurden. Der Wirkungsgradverlauf des umgerüsteten Kollektors wurde dann im wesentlichen nach Norm NBSIR 74-635 des National Bureau of Standards, Washington D.C. bestimmt.
Im gesamten Betriebsbereich lag die Wirkungsgrad-Kennlinie dieses Kollektors um mindestens 5 Prozentpunkte über derjenigen des Originalkollektors, die vorgängig auf gleiche Weise bestimmt wurde. Der Höchstwirkungsgrad lag um 85%. Da der modifizierte Kollektor vergleichsweise einfacher und billiger ist, wird die wirtschaftlichkeit der Wärmegewinnung durch die erfindungsgemässe Beschichtung wesentlich erhöht.

Patentansprüche

1. Farbe zur spektral selektiven Beschichtung von Metalloberflächen, welche Farbe ein Pigment sowie ein Bindemittel enthält, dadurch gekennzeichnet, dass das Pigment ein pulverförmiges, für Wärmestrahlung durchlässiges Metalloxyd ist, während das Bindemittel ein aushärtbares Bindemittel ist, welches nach dem Aushärten das Pigment auf einer Metalloberfläche festhält und gleichfalls für Wärmestrahlung durchlässig ist, wobei die Durchlässigkeit sowohl des Pigments wie auch des ausgehärteten Bindemittels so gross ist, dass die Farbschicht, auf der Metalloberfläche aufgebracht und ausgehärtet, dieser Oberfläche zumindest eine mittlere Selektivität, d.h. ein Verhältnis $\alpha/\epsilon$ von mindestens 2,5 verleiht.

2. Farbe nach Patentanspruch 1, dadurch gekennzeichnet, dass das Bindemittel ein schnellhärtendes Bindemittel ist.

3. Farbe nach Patentanspruch 2, dadurch gekennzeichnet, dass das Bindemittel bei Temperaturen oberhalb 180°C in weniger als 1 Minute thermisch aushärtbar ist.

4. Farbe nach einem der Patentansprüche 1 bis 3, dadurch gekennzeichnet, dass die aufgebrachte und ausgehärtete Farbschicht bei Temperaturen bis zu 600°C chemisch und mechanisch stabil ist.

5. Farbe nach einem der Patentansprüche 1 bis 4, dadurch gekennzeichnet, dass sie als Pigment Chrom(III)-oxyd ($Cr_2O_3$), Kobalt(II,III)-oxyd ($Co_3O_4$), Eisen(II,III)-oxyd ($Fe_3O_4$), Kupfer(II)-oxyd ($CuO$) oder eine Mischung der genannten Oxyde in beliebigen Verhältnissen enthält.

6. Farbe nach einem der Patentansprüche 1 bis 5, dadurch gekennzeichnet, dass das Bindemittel Glycerol ($C_3H_8O_3$) ist.

7. Farbe nach den Patentansprüchen 5 und 6, dadurch gekennzeichnet, dass sie Kobaltoxyd als Pigment und Glycerol als Bindemittel in einem Gewichtsverhältnis zwischen ca. 1:2 und 5:1 enthält.

8. Farbe nach den Patentansprüchen 5 und 6, dadurch gekennzeichnet, dass sie Kobaltoxyd und Chromoxyd als Pigmente in einem Gewichtsverhältnis zwischen ca. 1:1 und 1:3 sowie Glycerol als Bindemittel enthält.

9. Verwendung einer Farbe nach einem der Patentansprüche 1 bis 8 zur spektral selektiven Beschichtung des Absorptionselementes eines Strahlungsenergiekollektors.

10. Verwendung einer Farbe gemäss Patentanspruch 9 auf dem Absorptionselement eines Sonnenenergiekollektors.

Europäisches Patentamt

EUROPÄISCHER RECHERCHENBERICHT

Nummer der Anmeldung

EP 79 10 1286

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| D | FR - A - 2 362 357 (WOODMAN)<br>  * Ansprüche; Beispiele 1-5 *<br>  --<br>US - A - 4 011 190 (M. TELKES)<br>  * Ansprüche 1,6,13-17; Beispiel II *<br>  --<br>US - A - 3 810 777 (C.P. BOEBEL et al.)<br>  * Ansprüche 1,3 *<br>  --<br>FR - A - 2 297 904 (MALLET)<br>  * Anspruch 1 *<br>  ---- | 1,5<br><br>1,5<br><br>1,5<br><br>1,5 | F 24 J 3/02<br>C 09 D 5/32<br><br><br><br>RECHERCHIERTE SACHGEBIETE (Int. Cl.³)<br><br>F 24 J 3/02<br>C 09 D 5/32 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-05-1980 | DE ROECK |

EPA form 1503.1  06.78